# EUROPEAN PATENT APPLICATION

(11) **EP 1 804 242 A1**
(43) Date of publication of application: **04.07.2007**
(21) Application number: 05795549.4
(22) Date of filing: 18.10.2005
(51) Int. Cl.: G11B 7/24

(54) **OPTICAL INFORMATION RECORDING MEDIUM AND METHOD FOR MANUFACTURING SAME**

(30) Priority: 18.10.2004 JP 2004303006
(71) Applicant: FUJIFILM Corporation, Minato-ku Tokyo 106-8620 (JP)
(72) Inventor: IMAI, Takashi, c/o FUJIFILM Corporation, Odawara-shi, Kanagawa 250-0001 (JP); USAMI, Yoshihisa, c/o FUJIFILM Corporation, Shizuoka 418-8666 (JP); KATAYAMA, Kazutoshi, c/o FUJIFILM Corporation, Odawara-shi, Kanagawa 250-0001 (JP)
(74) Representative: Siegert, Georg
(86) International application number: PCT/JP2005/019140
(87) International publication number: WO 2006/043564

(57) **Abstract**

To provide an optical information recording medium capable of attaining high density recording and reducing the leakage of signals to adjacent tracks (cross-talk).

The optical information recording medium includes: a first substrate having a pre-groove; an undercoating layer, a dye recording layer, and a reflective layer provided in this order on the first substrate; and a second substrate bonded to the reflective layer via an adhesive layer or a sticky layer, in which the pre-groove has a track pitch of 0.1 to 0.6 µm and a groove depth of 20 to 200 nm.

## Description

### TECHNICAL FIELD

The present invention is related to an optical information recording medium capable of recording at high density.

### BACKGROUND ART

Heretofore, optical disc referred to as a write once digital versatile disc (so-called DVD-R) capable of recording information by laser light only once has been proposed for recording and reproducing a great amount of character information, image information, sound information, etc. The DVD-R has a structure in which two disks are bonded to each other each of which has, on a transparent disc-like substrate, a dye recording layer containing a dye, and usually a light reflective layer provided on the dye recording layer, and optionally a protective layer, or a structure in which the above disc is adhered, with an adhesive, to a disc-like protective substrate having the same shape as the disc such that the dye recording layer is located inside. The disc-like substrate has a guide groove (pre-groove) for tracking of the irradiated laser light, and the track pitch of the pre-groove is as narrow as one-half or less (0.74 to 0.8 µm) compared with the track pitch of the pre-groove of a CD-R. Information is recorded on and reproduced from a DVD-R by irradiating a visible laser light (usually, a laser light at a wavelength within a range from 630 to 680 nm), and recording at a higher density than CD-R is possible.

Further, with the start of digital high vision broadcasting, it has been expected that the amount of image data will be increased further. Because of the increase in the amount of image data, it is required for the optical information recording medium to enable high capacity and high data transfer rate. When recording digital high vision broadcasting for domestic use, it is forecast that the capacity is insufficient even with the DVD±R described above, and a next-generation DVD is also under development. As an example, a write once HD DVD having the constitution substantially equal to the DVD±R has been proposed.

The substrate for the optical information recording medium referred to as HD DVD has a pre-groove at a track pitch (0.3 to 0.5 µm) narrower than that of DVD-R, thereby enabling recording at high density. Further, recording and reproduction with HD DVD are possible by using blue-purple semiconductor laser at a wavelength of 400 to 500 nm. Although the optical information recording medium having such a small track pitch is capable of high density recording, the medium has a problem in that leakage of signals into adjacent tracks increases, that is, cross-talk increases.

### DISCLOSURE OF THE INVENTION

### Problems to be solved by the invention

The present invention has been accomplished in view of the foregoing problems in the prior art. An object of the invention is to provide an optical information recording medium capable of attaining high density recording and reducing leakage (cross-talk) of signals to adjacent tracks.

### Means for solving the problems

An optical information recording medium of the invention includes a first substrate having a pre-groove, an undercoating layer, a dye recording layer, and a reflective layer provided in this order on the first substrate, and a second substrate bonded onto the reflective layer via an adhesive layer or a sticky layer. The pre-groove has a track pitch of 0.1 to 0.6 µm and a groove depth of 20 to 200 nm.
Since the optical information recording medium has such a pre-groove, recording at high density is possible. Further, since the optical information recording medium has an undercoating layer between the dye recording layer and the substrate, diffusion of excess heat is facilitated upon formation of recording pits by the irradiation of laser light and, as a result, leakage of signals to adjacent tracks can be decreased.
Further, the undercoating layer in the invention preferably contains one compound selected from the group consisting of a Nb oxide, a Nb nitride, a Ta oxide, and a Ta nitride, and more preferably contains a Nb oxide or a Ta oxide, and further preferably contains a composite oxide containing a Nb oxide and/or a Ta oxide.
The material constituting the undercoating layer is preferably Nb₂O₅-SiO₂, Nb₂O₅-Al₂O₃, Nb₂O₅-Ta₂O₅, Ta₂O₅-SiO₂, or Ta₂O₅-Al₂O₃.
In the optical information recording medium of the invention, the thickness of the undercoating layer is preferably within a range of 1 to 200 nm.
A method of manufacturing an optical information recording medium according to the invention includes:
forming an undercoating layer, a dye recording layer and a reflective layer in this order on a first substrate;
bonding a second substrate onto the reflective layer via an adhesive layer or a sticky layer;
wherein the first substrate has a pre-groove and the track pitch of the pre-groove is from 0.1 to 0.6 µm, and the groove depth is from 20 to 200 nm.

### Advantages of the Invention]

The invention can provide an optical information recording medium capable of attaining high density recording and decreasing leakage of signals into adjacent tracks (cross-talk).

### BEST MODE FOR CARRYING OUT THE INVENTION

The optical information recording medium according to the invention includes a first substrate having a pre-groove, an undercoating layer, a dye recording layer and a reflective layer provided in this order on the first substrate, and a second substrate bonded onto the reflective layer via an adhesive layer or a sticky layer. The pre-groove has a track pitch of 0.1 to 0.6 µm and a groove depth of 20 to 200 nm. The method of manufacturing the optical information recording medium of the invention includes forming an undercoating layer, a dye recording layer and a reflective layer in this order on a first substrate, bonding a second substrate onto the reflective layer via an adhesive layer or a sticky layer, wherein the first substrate has a pre-groove, the track pitch of the pre-groove is from 0.1 to 0.6 µm, and the groove depth is from 20 to 200 nm.
Since the optical information recording medium according to the invention has a pre-groove described above, high density recording can be conducted on the optical information recording medium according to the invention. Further, since the undercoating layer is present between the dye recording layer and the substrate, excellent effects can be obtained in that excess heat easily diffuses upon formation of recording pits with irradiation of a laser light, and thus leakage of signals to adjacent tracks can be reduced.
The respective components of the optical information recording medium of the invention will be described hereinafter.

### First Substrate

The material for the first substrate of the optical information recording medium according to the invention can be selected arbitrarily from various materials used for substrates of conventional optical disks.
Examples of the substrate material include glass, polycarbonate, acrylic resins such as polymethyl acrylate, vinyl chloride resins such as polyvinyl chloride and vinyl chloride copolymers, epoxy resins, amorphous polyolefins and polyesters. Plural substrate materials may be used together as necessary. Among the above materials, polycarbonate is preferred in view of humidity resistance, dimensional stability, cost, etc.
The thickness of the first substrate is preferably from 0.5 to 1.2 mm, and more preferably from 0.6 to 1.1 mm.

In the invention, the pre-groove formed on the first substrate has a track pitch of 0.1 to 0.6 µm and a groove depth of 20 to 200 nm from a viewpoint of attaining recording at high density. The track pitch is more preferably within a range from 0.33 to 0.50 µm. Further, the groove depth is preferably within a range from 50 to 150 nm, and more preferably within a range from 70 to 100 nm.
Further, the groove width of the pre-groove (half-value width) formed on the first substrate is preferably within a range from 100 to 300 nm, and more preferably within a range from 120 to 250 nm.
In addition, the groove tilting angle of the pre-groove is preferably within a range from 20 to 80°, and more preferably within a range from 30 to 70°.

A base coating layer may also be provided on the surface of the substrate on the side to be provided with the dye recording layer (on the side having the pre-groove) for the purposes of improving the planarity, improving the adhesion power and preventing the denaturation of the dye recording layer.
Examples of the material for the base coating layer include polymeric materials such as polymethyl methacrylate, acrylic acid-methacrylic acid copolymer, styrenemaleic acid anhydride copolymer, polyvinyl alcohol, N-methylol acrylamide, styrene-vinyl toluene copolymer, chlorosulfonated polyethylene, nitrocellulose, poly vinyl chloride, chlorinated polyolefin, polyester, polyimide, vinyl acetate-vinyl chloride copolymer, ethylene-vinyl acetate copolymer, polyethylene, polypropylene, polycarbonate, etc.; and surface modifying agents such as a silane coupling agent. The base coating layer can be formed by preparing a coating solution by dissolving or dispersing a material for the base coating layer in an appropriate solvent, and coating the coating solution on the surface of a substrate by a coating method such as spin coating, dip coating, or extrusion coating.
The thickness of the base coating layer is generally within a range from 0.005 to 20 µm, and preferably within a range from 0.01 to 10 µm.

### [Undercoating Layer]

The undercoating layer in the invention is provided between the substrate and a dye recording layer to be described later for the purposes of enhancing the storability of the dye recording layer and controlling the heat conductivity.
The material used for the undercoating layer may also be a material transmitting the laser light used for recording and reproduction. While the material used for the undercoating layer is not particularly restricted so long as the material transmits the laser light and, for example, it is preferably a material of low permeability to gas or moisture.
Specifically, materials containing nitrides, oxides, carbides, or sulfides of elements such as Zn, Si, Ti, Te, Sn, Mo. Ge, Nb, and Ta are preferable. Among them, in view of the storage stability under high humidity and high temperature, the material preferably contains one compound selected from the group consisting of Nb oxides, Nb nitrides, Ta oxides, and Ta nitrides. The material contains more preferably a composite oxide containing Nb oxide and/or Ta oxide.

Preferred specific examples of the material for the undercoating layer include ZnS, MoO₂, GeO₂, TeO, SiO₂, TiO₂, ZnO, ZnS-SiO₂, SnO₂, ZnO-Ga₂O₃, Nb₂O₅, Ta₂O₅, Nb₂O₅-SiO₂, Nb₂O₅-Al₂O₃, Nb₂O₅-Ta₂O₅, Ta₂O₅-SiO₂, and Ta₂O₅-Al₂O₃. Among them, Nb₂O₅, Ta₂O₅, Nb₂O₅-SiO₂, Nb₂O₅-Al₂O₃, Nb₂O₅-Ta₂O₅, Ta₂O₅-SiO₂, and Ta₂O₅-Al₂O₃, and Nb₂O₅-SiO₂, Nb₂O₅-Al₂O₃, Nb₂O₅-Ta₂O₅, Ta₂O₅-SiO₂, and Ta₂O₅-Al₂O₃ are particularly preferred since they render favorable storability.

Further, when the species of the oxides or the ratio thereof in the composite oxides (that is, materials containing two or more kinds of oxides) usable in the undercoating layer is changed, the refractive index of the film (undercoating layer) changes. Along with the change of the refractive index of the undercoating layer, the reflectance of the optical information recording medium changes. Accordingly, when a composite oxide is used for the undercoating layer, the reflectance of the optical information recording medium can also be changed by controlling the composition, etc. thereof.

Further, the undercoating layer can be formed by a vacuum film forming method such as vacuum vapor deposition, DC sputtering, RF sputtering, or ion plating. Among them, use of sputtering is more preferred and use of RF sputtering is further preferred.
The thickness of the undercoating layer in the invention is preferably within a range from 1 to 200 nm, more preferably within a range from 5 to 100 nm, and further preferably within a range from 10 to 40 nm from a viewpoint of controlling the heat diffusion during recording pit formation.

### [Dye Recording Layer]

The dye recording layer is a layer containing a dye capable of absorbing the laser light used for recording and reproduction, in which code information such as digital information is to be recorded.
Specific examples of the dye contained in the dye recording layer include cyanine dyes, oxonol dyes, metal complex dyes, azo dyes, phthalocyanine dyes, etc.
Further, dyes described, for example, in JP-A Nos. 4-74690, 8-127174, 11-53758, 11-334204, 11-334205, 11-334206, 11-334207, 2000-43423, 2000-108513 and 2000-158818 are used preferably. The disclosure of Japanese Patent Application No. 2004-303006 is incorporated herein by reference in its entirety.
Further, organic compounds such as triazole compounds, triazine compounds, cyanine compounds, merocyanine compounds, amino butadiene compounds, phthalocyanine compounds, succinic acid compounds, viologen compounds, azo compounds, oxanole benzooxazole compounds, benzotriazole compounds, and oxonol compounds can also be used suitably. Among the compounds, cyanine compounds, phathalocyanine compounds and oxonol compounds are particularly preferred.

In the following, phthalocyanine dyes suitable for use in the dye recording layer in the invention will be described.
Phthalocyanine dyes suitable in the invention are compounds represented by the following general formula (1).

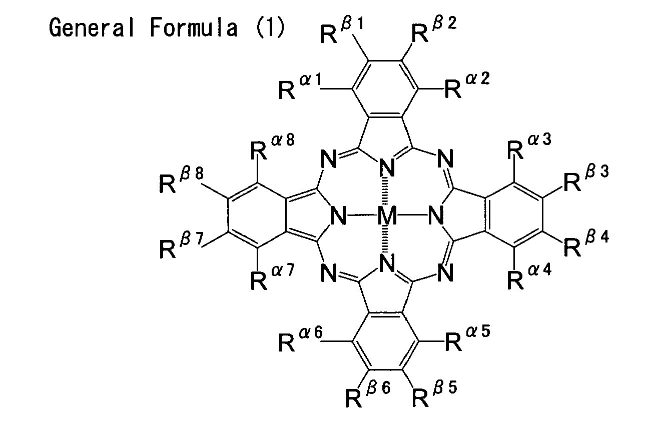

In the general formula (1), R^{α1} to R^{α8} and R^{β1} to R^{β8} each independently represent a hydrogen atom, a halogen atom, a cyano group, a nitro group, a formyl group, a carboxyl group, a sulfo group, an alkyl group containing 1 to 20 carbon atoms, an aryl group containing 6 to 14 carbon atoms, a heterocyclic group containing 1 to 10 carbon atoms, an alkoxy group containing 1 to 20 carbon atoms, an aryloxy group containing 6 to 14 carbon atoms, an acyl group containing 2 to 21 carbon atoms, an alkylsulfonyl group containing 1 to 20 carbon atoms, an arylsulfonyl group containing 6 to 20 carbon atoms, a carbamoyl group containing 1 to 25 carbon atoms, a sulfamoyl group containing 0 to 32 carbon atoms, an alkoxycarbonyl group containing 2 to 21 carbon atoms, an aryloxycarbonyl group containing 7 to 15 carbon atoms, an acylamino group containing 2 to 21 carbon atoms, a sulfonylamino group containing 1 to 20 carbon atoms, and an amino group containing 0 to 36 carbon atoms. Among all, the sulfamoyl group is preferred.
Further M represents two hydrogen atoms, a metal, a metal oxide, or a metal having a ligand.

In the general formula (1), it is preferred that all of R^{α1} to R^{α8} are not hydrogen atoms simultaneously. Further it is preferred that the four substituents represented by one of R^{α1} and R^{α2}, one of R^{α3} and R^{α4}, one of R^{α5} and R^{α6}, and one of R^{α7} and R^{α8} are not simultaneously hydrogen atoms; in this case, it is particularly preferred that all of R^{β1} to R^{β8} are simultaneously hydrogen atoms. In a preferred embodiment, one of R^{α1} and R^{α2} is other than a hydrogen atom, one of R^{α3} and R^{α4} is other than a hydrogen atom, one of R^{α5} and R^{α6} is other than a hydrogen atom, and one of R^{α7} and R^{α8} is other than a hydrogen atom.

In the general formula (1), preferred examples of R^{α1} and R^{α8} and R^{β1} to R^{β8} include a hydrogen atom, a halogen atom, a carboxyl group, a sulfo group, an alkyl group containing 1 to 16 carbon atoms, an aryl group containing 6 to 10 carbon atoms, an alkoxy group containing 1 to 16 carbon atoms, an aryloxy group containing 6 to 10 carbon atoms, an alkylsulfonyl group containing 1 to 16 carbon atoms, a sulfamoyl group containing 2 to 20 carbon atoms, an alkoxycarbonyl group containing 2 to 17 carbon atoms, an aryloxycarbonyl group containing 7 to 11 carbon atoms, an acylamino group containing 2 to 18 carbon atoms, and a sulfonylamino group containing 1 to 18 carbon atoms.
Further, R^{α1} to R^{α8} and R^{β1} to R^{β8} are more preferably selected from a hydrogen atom, a halogen atom, a carboxyl group, a sulfo group, an alkoxy group containing 1 to 16 carbon atoms, an aryloxy group containing 6 to 10 carbon atoms, an alkylsulfonyl group containing 1 to 14 carbon atoms, an arylsulfonyl group containing 6 to 14 carbon atoms, a sulfamoyl group containing 2 to 16 carbon atoms, an alkoxycarbonyl group containing 2 to 13 carbon atoms, an acylamino group containing 2 to 14 carbon atoms, and a sulfonylamino group containing 1 to 14 carbon atoms.

In a further preferred embodiment, R^{α1} to R^{α8} are selected from a hydrogen atom, a halogen atom, a sulfo group, an alkoxy group containing 8 to 16 carbon atoms, a sulfonyl group containing 1 to 12 carbon atoms, a sulfamoyl group containing 1 to 12 carbon atoms, an acylamino group containing 2 to 12 carbon atoms, and a sulfonylamino group containing 1 to 12 carbon atoms. Further, R^{β1} to R^{β8} are each a hydrogen atom or a halogen atom.
In a particularly preferred embodiment, at least one of R^{α1} to R^{α8} is an alkylsulfonyl group containing 1 to 10 carbon atoms, an arylsulfonyl group containing 6 to 14 carbon atoms, or a sulfamoyl group containing 1 to 10 carbon atoms, and R^{β1} to R^{β8} are hydrogen atoms.

In the general formula (1), R^{α1} to R^{α8} and R^{β1} to R^{β8} may further have a substituent, and examples of the substituent include the following: linear or cyclic alkyl groups containing 1 to 20 carbon atoms (for example, a methyl group, an ethyl group, an isopropyl group, and a cyclohexyl group), aryl groups containing 6 to 18 carbon atoms (for example, a phenyl group, a chlorophenyl group, a 2,4-di-t-amylphenyl group, and a 1-naphtnyl group), alkenyl groups containing 2 to 20 carbon atoms (for example, a vinyl group and a 2-methyl vinyl group), alkynyl groups containing 2 to 20 carbon atoms (for example, an ethynyl group, a 2-methylethynyl group, and a 2-phenylethynyl group), halogen atoms (for example, F, Cl, Br, and I), a cyano group, a hydroxyl group, a carboxyl group, acyl groups containing 2 to 20 carbon atoms (for example, an acetyl group, a benzoyl group, a salicyloyl group, a pivaloyl group), alkoxy groups containing 1 to 20 carbon atoms (for example, a methoxy group, a butoxy group, and a cyclohexyloxy group), aryloxy groups containing 6 to 20 carbon atoms (for example, a phenoxy group, a 1-naphthoxy group, and a toluoyl group), alkylthio groups containing 1 to 20 carbon atoms (for example, a methylthio group, a butylthio group, a benzylthio group, and a 3-methoxypropylthio group), arylthio groups containing 6 to 20 carbon atoms (for example, a phenylthio group and a 4-chlorophenylthio group), alkylsulfonyl groups containing 1 to 20 carbon atoms (for example, a methane sulfonyl group and a butane sulfonyl group), arylsulfonyl groups containing 6 to 20 carbon atoms (for example, a benzene sulfonyl group and a paratoluene sulfonyl group), carbamoyl groups containing 1 to 17 carbon atoms (for example, a non-substituted carbamoyl group, a methylcarbamoyl group, an ethylcarbamoyl group, an n-butylcarbamoyl group, and a dimethylcarbamoyl group), amide groups containing 1 to 16 carbon atoms (for example, an acetoamide group and a benzoamide group), acyloxy groups containing 2 to 10 carbon atoms (for example, an acetoxy group and a benzoyloxy group), alkoxycarbonyl groups containing 2 to 10 carbon atoms (for example, a methoxy carbonyl group and an ethoxy carbonyl group), 5- or 6-membered heterocyclic groups (for example, aromatic heterocyclic rings such as a pyridyl group, a thienyl group, a furyl group, a thiazolyl group, an imidazolyl group, and a pyrazolyl group, and heterocyclic groups such as a pyrrolidine ring group, a piperidine ring group, a morpholine ring group, a pyrane ring group, a thiopyran ring group, a dioxane ring group, and a dithiolane ring group).

In the general formula (1), substituents for R^{α1} to R^{α8} and R^{β1} to R^{β8} are preferably selected from linear or cyclic alkyl groups containing 1 to 16 carbon atoms, aryl groups containing 6 to 14 carbon atoms, alkoxy groups containing 1 to 16 carbon atoms, aryloxy groups containing 6 to 14 carbon atoms, halogen atoms, alkoxycarbonyl groups containing 2 to 17 carbon atoms, carbamoyl groups containing 1 to 10 carbon atoms, and amide groups containing 1 to 10 carbon atoms. Among them preferred are linear or cyclic alkyl groups containing 1 to 10 carbon atoms, aralkyl groups containing 7 to 13 carbon atoms, aryl groups containing 6 to 10 carbon atoms, alkoxy groups containing 1 to 10 carbon atoms, aryloxy groups containing 6 to 10 carbon atoms, a chlorine atom, alkoxycarbonyl groups containing 2 to 11 carbon atoms, carbamoyl groups containing 1 to 7 carbon atoms, and amide groups containing 1 to 8 carbon atoms. Particularly preferred are linear, branched, or cyclic alkyl groups containing 1 to 8 carbon atoms, aralkyl groups containing 7 to 11 carbon atoms, alkoxy groups containing 1 to 8 carbon atoms, alkoxycarbonyl groups containing 3 to 9 carbon atoms, a phenyl group and a chlorine group. Furthermore preferred are alkoxy groups containing 1 to 6 carbon atoms.

In the general formula (1), M is preferably a metal, and particularly, zinc, magnesium, copper, nickel, or palladium is preferred and, further, copper, zinc, or magnesium is preferred and, particularly, copper or zinc is preferred.
Further, a ferrocenyl group which may be substituted may be present in the molecule of the phthalocyanine dye represented by the general formula (I).

Specific examples of the phthalocyanine dye represented by the general formula (1) are shown below, but the invention is not restricted to them.
In the following Tables 1 to 4, indication "R^{x}/R^{y}" (x and y represents one of α1 to α8 and β1 to β8) means either one of R^{x} and R^{y}. Further, for R^{α1} to R^{α8} and R^{β1} to R^{β8}, the indication is omitted in the case of non-substitution, that is, in the case where a hydrogen atom is bonded.

**Table 1**

| No. | Substitution positions and substituents | M |
|---|---|---|
| (I-1) | R^{α1}/R^{α2}, R^{α3}/R^{α4}, R^{α5}/R^{α6}, R^{α7}/R^{α8} | Cu |
| | -SO₂N(C₅H₁₁-i)₂ | |
| (I-2) | R^{α1}/R^{α2}, R^{α3}/R^{α4}, R^{α5}/R^{α6}, R^{α7}/R^{α8} | Cu |
| | -SO₂NH(2-s-buloxy-5-t-amylphenyl) | |
| (I-3) | R^{α1}/R^{α2}, R^{α3}/R^{α4}, R^{α5}/R^{α6} | Cu |
| | -SO₂NH(CH₂)₃O(2, 4-di-t-amyl-phenyl) | |
| | R^{α7}/R^{α8}-SO₃H | |
| (I-4) | R^{α1}/R^{α2}, R^{α3}/R^{α4}, R^{α5}/R^{α6}, R^{α7}/R^{α8} | Ni |
| | -SO₂N(3-methoxypropyl) | |
| (1-5) | R^{α1}/R^{α2},R^{α3}/R^{α4},R^{α5}/R^{α6},R^{α7}/R^{α8} | Ni |
| | -SO₂NMe(cyclohexyl) | |
| (1-6) | R^{α1}/R^{α2},R^{α3}/R^{α4},R^{α5}/R^{α6},R^{α7}/R^{α8} R^{α1}/R^{α2},R^{α3}/R^{α4},R^{α5}/R^{α6},R^{α7}/R^{α8} | Ni |
| | -SO₂N(3-i-propoxyphenyl)₂ | |
| (1-7) | R^{α1}/R^{α2},R^{α3}/R^{α4},R^{α5}/R^{α6},R^{α7}/R^{α8} | Pd |
| | -SO₂NH(2-i-amyloxy-carbonylphenyl) | |
| (1-8) | R^{α1}/R^{α2},R^{α3}/R^{α4},R^{α5}/R^{α6},R^{α7}/R^{α8} | Pd |
| | -SO₂NH(2, 4, 6-trimethyl-phenyl) | |
| (1-9) | R^{α1}/R^{α2},R^{α3}/R^{α4},R^{α5}/R^{α6},R^{α7}/R^{α8} | Co |
| | -SO₂(4-morpholino) | |
| (1-10) | R^{α1}/R^{α2}, R^{α3}/R^{α4}, R^{α5}/R^{α6}, R^{α7}/R^{α8} | Fe |
| | -SO₂N(C₂H₅)(4-fluorophenyl) | |
| (1-11) | R^{α1}/R^{α2}, R^{α3}/R^{α4}, R^{α5}/R^{α6} | Cu |
| | -SO₂NH(CH₂)₃N(C₂H₅)₂ | |
| (1-12) | R^{α1}/R^{α2}, R^{α3}/R^{α4}, R^{α5}/R^{α6}, R^{α7}/R^{α8} | Cu |
| | -SO₂(2-n-propoxyphenyl) | |
| (1-13) | R^{α1}/R^{α2}, R^{α3}/R^{α4}, R^{α5}/R^{α6}, R^{α7}/R^{α8} | Ni |
| | -SO₂(2-n-butoxy-5-t-butyl-phenyl) | |
| (I-14) | R^{α1}/R^{α2}, R^{α3}/R^{α4}, R^{α5}/R^{α6}, R^{α7}/R^{α8} | Co |
| | -SO₂(2-methoxycarbonyl-phenyl) | |

**Table 2**

| No. | Substitution positions and substituents | M |
|---|---|---|
| (I-15) | R^{α1}/R^{α2},R^{α3}/R^{α4},R^{α5}/R^{α6},R^{α7}/R^{α8} | Cu |
| | -SO₂(CH₂)₄O(2-chloro-4-t-amylphenyl) | |
| (I-16) | R^{α1}/R^{α2},R^{α3}/R^{α4},R^{α5}/R^{α6},R^{α7}/R^{α8} | Pd |
| | -SO₂(CH₂)₂CO₂C₄H₉-i | |
| (I-17) | R^{α1}/R^{α2},R^{α3}/R^{α4},R^{α5}/R^{α6} | Cu |
| | -SO₂(cyclohexyl) | |
| | R^{α1}/R^{α2},R^{α3}/R^{α4},R^{α5}/R^{α6},R^{α7}/R^{α8} | |
| (I-18) | -SO₂[4-(2-s-butoxy | Ni |
| | -benzoylamino)phenyl] | |
| (I-19) | R^{α1}/R^{α2}, R^{α3}/R^{α4},R^{α5}/R^{α6}-SO₂(2,6-dichloro | Pd |
| | -4-methoxyphenyl) | |
| | R^{α1}/R^{α2},R^{α3}/R^{α4},R^{α5}/R^{α6} | |
| (I-20) | -SO₂CH(Me)CO₂CH₂ | Mg |
| | -CH(C₂H₅)C₄H₉-n | |
| | R^{α1}/R^{α2},R^{α3}/R^{α4},R^{α5}/R^{α6},R^{α7}/R^{α8} | |
| (I-21) | -SO₂{2-(2-ethoxyethoxy)-phenyl} | Zn |
| | R^{β1}/R^{β2},R^{β3}/R^{β4},R^{β5}/R^{β6},R^{β7}/R^{β8}-C₂H₅ | |
| (I-22) | R^{α1}/R^{α2},R^{α3}/R^{α4},R^{α5}/R^{α6},R^{α7}/R^{α8} | Cu |
| | -SO₂N(CH₂CH₂OMe)₂ | |
| (I-23) | R^{α1}/R^{α2},R^{α3}/R^{α4},R^{α5}/R^{α5},R^{α7}/R^{α8} | Ni |
| | -OCH₂CH(C₂H₅)C₄H₉-n | |
| (I-24) | R^{α1}/R^{α2},R^{α3}/R^{α4},R^{α5}/R^{α6},R^{α7}/R^{α8} | Zn |
| | -OCHMe(phenyl) | |
| (I-25) | R^{α1}/R^{α2},R^{α3}/R^{α4},R^{α5}/R^{α6},R^{α7}/R^{α8} | Cu |
| | -OCH(s-butyl) | |
| (I-26) | R^{α1}/R^{α2},R^{α3}/R^{α4},R^{α5}/R^{α6},R^{α7}/R^{α8} | SiCl₂ |
| | -OCH₂CH₂OC₃H₇-i | |
| | R^{α1}/R^{α2},R^{α3}/R^{α4},R^{α5}/R^{α6},R^{α7}/R^{α8} | |
| (I-27) | -t-amyl | Ni |
| | R^{β1}/R^{β2}, R^{β3}/R^{β4}, R^{β5}/R^{β6}, R^{β7}/R^{β8}-Cl | |

**Table 3**

| No. | Substitution positions and substituents | M |
|---|---|---|
| (I-28) | R^{α1}/R^{α2},R^{α3}/R^{α4},R^{α5}/R^{α6},R^{α7}/R^{α8} | Zn |
| | -(2, 6-di-ethoxyphenyl) | |
| | R^{α1}/R^{α2},R^{α3}/R^{α4},R^{α5}/R^{α6} | |
| (1-29) | -SO₂NHCH₂CH₂OC₃H₇-i | Cu |
| | R^{α7}/R^{α8}-SO₃H | |
| | R^{α1}/R^{α2},R^{α3}/R^{α4},R^{α5}/R^{α6} | |
| (I-30) | -CO₂CH₂CH₂OC₂H₅ | Cu |
| | R^{α7}/R^{α8}-CO₂H | |
| (I-31) | R^{α1}/R^{α2},R^{α3}/R^{α4},R^{α5}/R^{α6},R^{α7}/R^{α8} | Co |
| | -CO₂CH(Me)CO₂C₃H₇-i | |
| (I-32) | R^{α1}/R^{α2}, R^{α3}/R^{α4}, R^{α5}/R^{α6}, R^{α7}/R^{α8} | Cu |
| | -CONHCH₂CH₂OC₃H₇-i | |
| | R^{α1}/R^{α2}, R^{α3}/R^{α4}, R^{α5}/R^{α6} | |
| (1-33) | -CON(CH₂CH₂OC₄H₉-n)₂ | Pd |
| | R^{α7}/R^{α8}-CO₂H | |
| (I-34) | R^{α1}/R^{α2}, R^{α3}/R^{α4}, R^{α5}/R^{α6},R^{α7}/R^{α8} | Co |
| | -NHCOCH(C₂H₅)C₄H₉-n | |
| (I-35) | R^{α1}/R^{α2},R^{α3}/R^{α4},R^{α5}/R^{α6},R^{α7}/R^{α8} | Mg |
| | -NHCO(2-n-butoxycarbonyl-phenyl) | |
| (I-36) | R^{α1}/R^{α2},R^{α3}/R^{α4},R^{α5}/R^{α6},R^{α7}/R^{α8} | Pd |
| | -NHSO₂(2-i-propoxyphenyl) | |
| (I-37) | R^{α1}/R^{α2},R^{α3}/R^{α4},R^{α5}/R^{α6}, R^{α7}/R^{α8} | Zn |
| | -NHSO₂(2-n-butoxy-5-t-amyl-phenyl) | |
| (I-38) | R^{α1}/R^{α2},R^{α3}/R^{α4},R^{α5}/R^{α6},R^{α7}/R^{α8} | Ni |
| | -SO₂CH₃ | |
| (I-39) | R^{α1}/R^{α2},R^{α3}/R^{α4},R^{α5}/R^{α6},R^{α7}/R^{α8} | Cu |
| | -SO₂CH(CH₃)₂ | |
| (I-40) | R^{α1}/R^{α2},R^{α3}/R^{α4},R^{α5}/R^{α6},R^{α7}/R^{α8} | Cu |
| | -SO₂C₄H₉-s | |

**Table 4**

| No. | Substitution positions and substituents | M |
|---|---|---|
| (I-41) | R^{α1}/R^{α2},R^{α3}/R^{α4},R^{α5}/R^{α6},R^{α7}/R^{α8} | Zn |
| | -SO₂CH₂CO₂CH(CH₃)₂ | |
| (I-42) | R^{α1}/R^{α2},R^{α3}/R^{α4},R^{α5}/R^{α6},R^{α7}/R^{α8} | Cu |
| | -SO₂CH(CH₃)CO₂CH₃ | |
| (I-43) | R^{α1}/R^{α2},R^{α3}/R^{α4},R^{α5}/R^{α6},R^{α7}/R^{α8} | Cu |
| | -SO₂C₆H₅ | |
| (I-44) | R^{β1}/R^{β2},R^{β3}/R^{β4},R^{β5}/R^{β6},R^{β7}/R^{β8} | Cu |
| | -SO₂N(C₅H₁₁-i)₂ | |
| (I-45) | R^{β1}/R^{β2}, R^{β3}/R^{β4}, R^{β5}/R^{β6}, R^{β7}/R^{β8} R^{β1}/R^{β2},R^{β3}/R^{β4},R^{β5}/R^{β6}, R^{β7}/R^{β8} | Cu |
| | -SO₂CH(CH₃)₂ | |

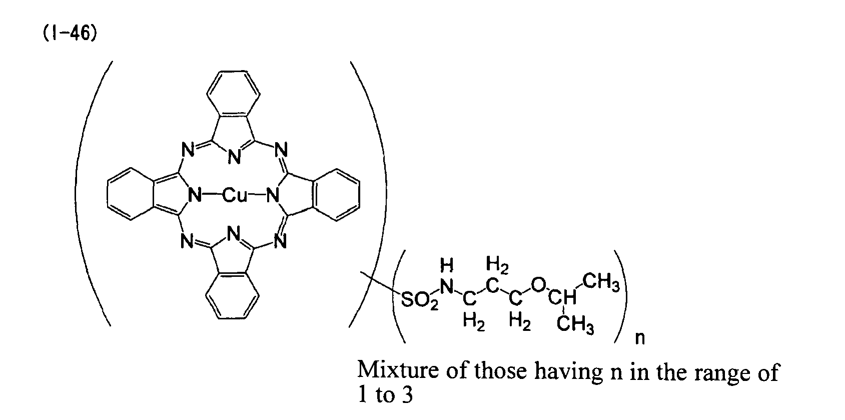

The phthalocyanine dye used in the invention can be synthesized, for example, by the method described or cited in "Phthalocyanine - Chemistry and Function -" (pp. 1 to 62), co-authored by Shirai - Kobayashi, published by IPC Co., and "Phthalocyanines - Properties and Applications" (pp. 1 to 54), co-authored by C.C. Leznoff - A.B.P. Lever, published fby VCH, etc. or methods similar to them.

Next, an oxonol dye suitable for use in the dye recording layer in the invention will be described.
An oxonol dye means a polymethine dye having an anionic chromophoric group.
In the invention, oxonol dyes represented by the following general formula (I) are particularly suitable from a viewpoint of their excellent recording characteristics.

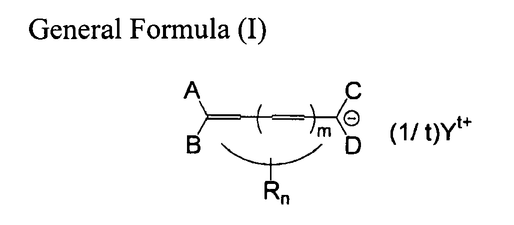

In the general formula (I), A, B, C, and D each represent such an electron attracting group that the sum of the Hammett's σp values of A and B, and the sum of the Hammett's σp values of C and D are each 0.6 or more. A and B may be connected to form a ring. C and D may be connected to form a ring. Further, R represents a substituent on methine carbon. m represents an integer of 0 to 3 and n represents an integer of 0 to 2m + 1. When n is an integer of 2 or greater, plural Rs are present, which may be same as or different from each other, and may be connected to form a ring.
Y^{t+} represents t-valent cation in which t represents an integer of 1 to 10.

The scope of the general formula (I) includes plural tautomers which differes in the indication of the localization position of the anion. In particular, when A, B, C, or D is -CO-E (E representing a substituent), the formula is expressed generally with the negative charge localized on the oxygen atom. For example, when D is -CO-E, the indication as in the following general formula (II) is generally used, and those with such indication are also included in the scope of the general formula (I).

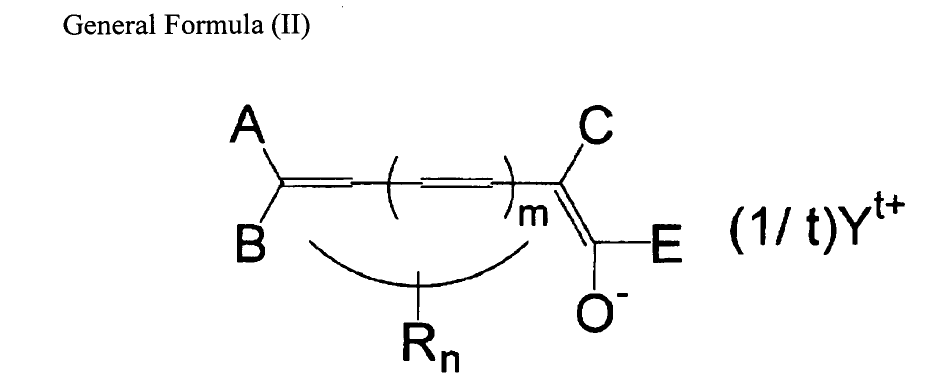

A, B, C, R, m, n, Y^{t+} and t in the general formula (II) have the same definitions as A, B, C, R, m, n, Y^{t+} and t in the general formula (I), respectively.

The oxonol dye represented by the general formula (I) will be described in the following.
In the general formula (I), A, B, C and D represent such electron attracting groups that the sum of the Hammett's σp values of A and B, and the sum of the Hammett's σp values of C and D are each 0.6 or more. A, B, C, and D may be same as or different from each other. A and B may be connected to form a ring. C and D may be connected to form a ring.
The Hammett's substituent constant σp value (hereinafter sometimes simply referred to as "σp value") is described, for example, in Chem. Rev. 91, 165 (1991) and reference documents cited therein. The Hammett's substituent constant σp value for a group whose Hammett's substituent constant σp value is not described in the above literature can also be determined by the method described in the literature.

The σp values of the electron attracting groups represented by A, B, C, and D are preferably independently within a range from 0.30 to 0.85, more preferably within a range from 0.35 to 0.80.
Further, when A and B (C and D) are connected to form a ring, σp value of A (C) means the σp value of -A-B-H (-C-D-H) group, and σp value of B (D) means the σp value of -B-A-H (-D-C-H) group. In this case, since the direction of bonding is different therebetween, the σp values are different.

Preferred specific examples of the electron attracting groups represented by A, B, C, and D include a cyano group, a nitro group, acyl groups containing 1 to 10 carbon atoms (for example, acetyl, propionyl, butylyl, pivarolyl, and benzoyl), alkoxy carbonyl groups containing 2 to 12 carbon atoms (for example, methoxy carbonyl, ethoxy carbonyl, isopropoxy carbonyl, butoxy carbonyl, and decyloxy carbonyl), aryoxy carbonyl groups containing 7 to 11 carbon atoms (for example, phenoxy carbonyl), carbamoyl groups containing 1 to 10 carbon atoms (for example, methyl carbamoyl, ethyl carbamoyl, and phenyl carbamoyl), alkylsulfonyl groups containing 1 to 10 carbon atoms (for example, methane sulfonyl), arylsulfonyl groups containing 6 to 10 carbon atoms (for example, benzene sulfonyl), alkoxysulfonyl groups containing 1 to 10 carbon atoms (for example, methoxy sulfonyl group), sulfamoyl groups containing 1 to 10 carbon atoms (for example, ethyl sulfamoyl and phenyl sulfamoyl), alkylsulfinyl groups containing 1 to 10 carbon atoms (for example, methane sulfinyl and ethane sulfinyl), arylsulfinyl groups containing 6 to 10 carbon atoms (for example, benzene sulfinyl), alkylsulfenyl groups containing 1 to 10 carbon atoms (for example, methane sulfenyl or ethane sulfenyl), arylsulfenyl groups containing 6 to 10 carbon atoms (for example, benzene sulfenyl), halogen atom, alkynyl groups containing 2 to 10 carbon atoms (for example, ethynyl), diacylamino groups containing 2 to 10 carbon atoms (for example, diacetylamino), a phosphoryl group, a carboxyl group, 5-membered or 6-membered heterocyclic rings (for example, 2-benzothiazolyl, 2-benzooxazolyl, 3-pyridyl, 5-(1H)-tetrazolyl, and 4-pyrimidyl).

In the general formula (I), examples of the substituent on a methine carbon represented by R include the following: a linear or cyclic alkyl groups containing 1 to 20 carbon atoms (for example, methyl, ethyl, n-propyl, isopropyl, and n-butyl), substituted or non-substituted aryl groups containing 6 to 18 carbon atoms (for example, phenyl, chlorophenyl, anisyl, toluyl, 2,4-di-t-amyl, and 1-naphthyl), alkenyl groups (for example, vinyl and 2-methylvinyl), alkynyl groups (for example, ethynyl, 2-methylethynyl, and 2-phenylethynyl), halogen atoms (for example, F, Cl, Br, and I), a cyano group, a hydroxyl group, a carboxyl group, acyl groups (for example, acetyl, benzoyl, salicyloyl, and pivaloyl), alkoxy groups (for example, methoxy, butoxy, and cyclohexyloxy), aryloxy groups (for example, phenoxy and 1-naphthoxy), alkylthio groups (for example, methylthio, butylthio, benzylthio, and 3-methoxypropylthio), arylthio groups (for example, phenylthio, and 4-chlorophenylthio), alkylsulfonyl groups (for example, methane sulfonyl and butane sulfonyl), arylsulfonyl groups (for example, benzene sulfonyl and paratoluene sulfonyl), carbamoyl groups containing 1 to 10 carbon atoms, amide groups containing 1 to 10 carbon atoms, imide groups containing 2 to 12 carbon atoms, acyloxy groups containing 2 to 10 carbon atoms, alkoxycarbonyl groups containing 2 to 10 carbon atoms, and heterocyclic ring (for example, aromatic heterocyclic ring such as pyridyl, thienyl, furyl, thiazolyl, imidazolyl, and pyrazolyl), aliphatic heterocyclic ring such as pyrrolidine ring, pyperidine ring, morpholine ring, pyran ring, thiopyran ring, dioxane ring, and dithiolane ring).

R is preferably a halogen atom, a linear or cyclic alkyl group containing 1 to 8 carbon atoms, an aryl group containing 6 to 10 carbon atoms, an alkoxy group containing 1 to 8 carbon atoms, an aryloxy group containing 6 to 10 carbon atoms, or a heterocyclic group containing 3 to 10 carbon atoms, and more preferably a chlorine atom, an alkyl group containing 1 to 4 carbon atoms (for example, methyl, ethyl, and isopropyl), a phenyl group, an alkoxy group containing 1 to 4 carbon atoms (for example, methoxy and ethoxy), a phenoxy group, or a nitrogen-containing heterocyclic group containing 4 to 8 carbon atoms (for example, 4-pyridyl, benzoxazol-2-yl, and benzothizol-2-yl).

n represents an integer of 0 to 2m+1. When n is an integer of 2 or greater, plural Rs are present, and the plural Rs may be same as or different from each other, and they may be combined with each other to form a ring. In this case, the number of atoms constituting the ring is preferably from 4 to 8, and particularly preferably 5 or 6. Further, atoms constituting the ring skeleton are preferably selected from carbon atoms, oxygen atoms and nitrogen atoms, and are particularly preferably carbon atoms.

Each of A, B, C, D, and R may further have a substituent and examples of the substituent include those described above as examples of the substituent represented by R in the general formula (I).

In the oxonol dye represented by the general formula (I), it is preferred that A and B, and/or, C and D are connected to form a ring from a viewpoint of heat decomposition property. Examples of such a ring include the following Specific Examples (1) to (64). In the Specific Examples (1) to (64), Ra, Rb, and Rc each independently represent a hydrogen atom or a substituent.

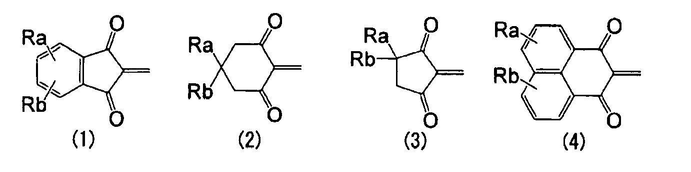

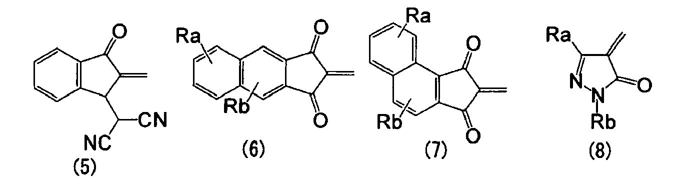

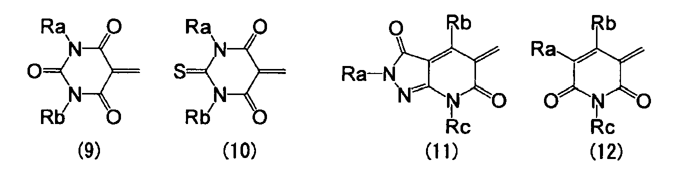

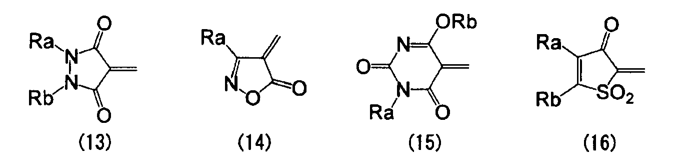

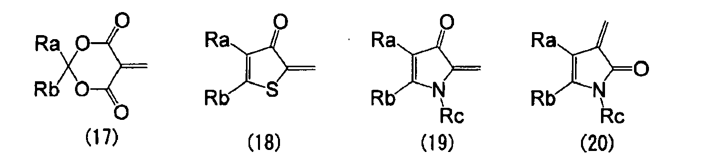

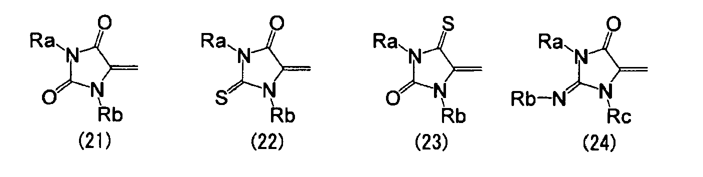

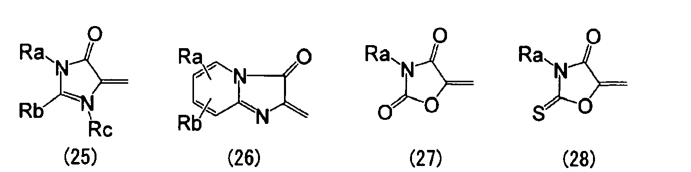

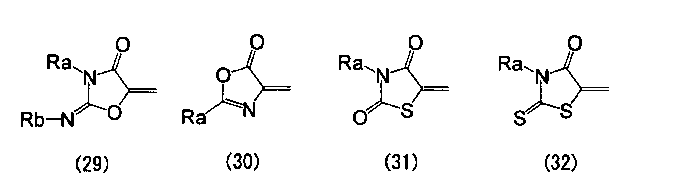

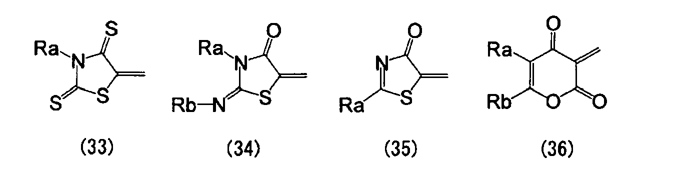

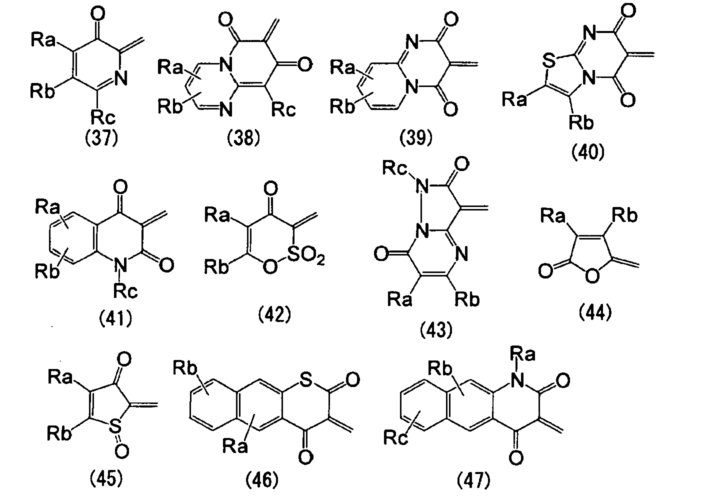

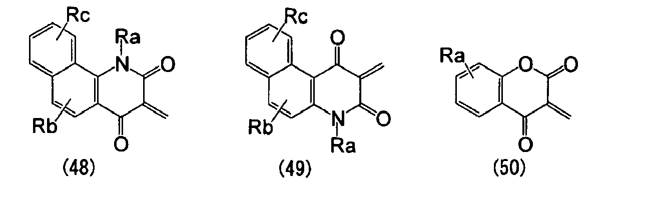

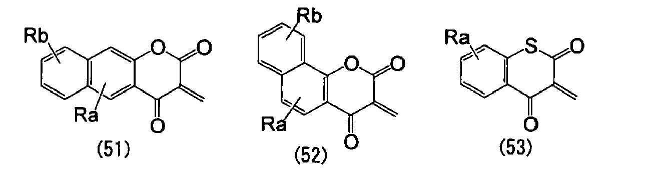

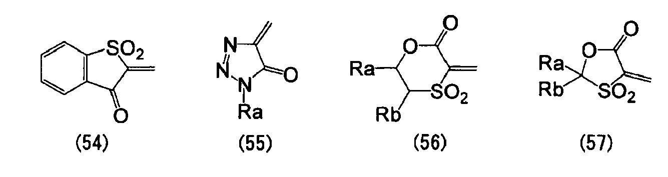

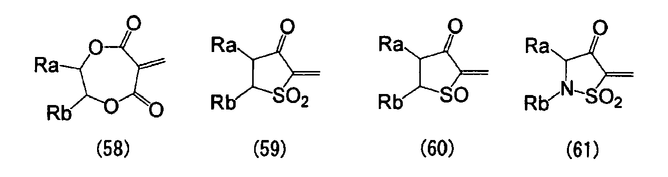

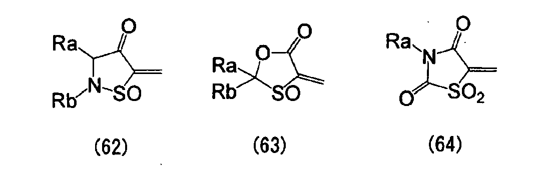

Among them, preferred rings are those shown by (8), (9), (10), (11), (12), (13), (14), (16), (17), (36), (39), (41), (54), and (57). More preferred are those shown by (8), (9), (10), (13), (14), (16), (17), and (57). Most preferred are show shown by (9), (10), (13), (17), and (57).

The definitions of the substituents represented by Ra, Rb, and Rc are the same as the definition of the substituent represented by R described above.
Further, Ra, Rb, and Rc may be connected to each other to form a carbon ring or heterocyclic ring. The carbon ring to be formed may be, for example, a saturated or unsaturated 4- to 7-membered carbon ring such as a cyclohexyl ring, a cyclopentyl ring, a cyclohexene ring, or a benzene ring. Further, the heterocyclic ring to be formed may be, for example, a saturated or unsaturated 4- to 7-membered heterocyclic ring such as a piperidine ring, a piperazine ring, a morpholine ring, a tetrahydrofuran ring, a furan ring, a thiophene ring, a pyridine ring, or a pyrazine ring. The carbon ring or heterocyclic ring may be substituted by a substituent selected from those shown as examples of the substituent represented by R.

In the general formula (I), m is an integer of 0 to 3. The absorption wavelength of the oxonol dye changes greatly depending on the value of m. Accordingly, a dye having an optimal absorption wavelength should be selected in accordance with the oscillation wavelength of the laser used for recording and reproduction and, in this regard, the selection of the value of m is important. When the center oscillation wavelength of the laser used for recording and reproduction is 780 nm (semiconductor laser for CD-R recording), m in the general formula (I) is preferably 2 or 3, and. When the center oscillation wavelength is 630 nm or 650 nm (semiconductor laser for DVD-R recording), m is preferably 1 or 2. When the center oscillation wavelength is 550 nm or less (for example, blue-purple semiconductor laser having a center oscillation wavelength of 405 nm), m is preferably 0 or 1.

In the general formula (I), the t-valent cation represented by Y^{t+} may be either an inorganic cation or organic cation.
The inorganic cation may be, for example, a hydrogen ion, a metal ion, or an ammonium ion (NH₄⁺), preferably a metal ion, and particularly preferably an alkali metal ion (for example, Li⁺, Na⁺, K⁺) or a transition metal ion (for example, Cu²⁺, Co²⁺). Further, when the inorganic cation is a transition metal ion, an organic ligand may be coordinated to the transition metal ion.

Further, the t-valent organic cation represented by Y^{t+} is preferably an onium ion, and particularly preferably, a cation represented by the following general formula (III).
The compound represented by the following general formula (III) can be obtained easily by Menschutkin reaction between a corresponding dipyridyl and a halide having a desired substituent (for example, refer to JP-A No. 61-148162), or an arylation reaction according to the method described in JP-A Nos. 51-16675 and 1-96171.

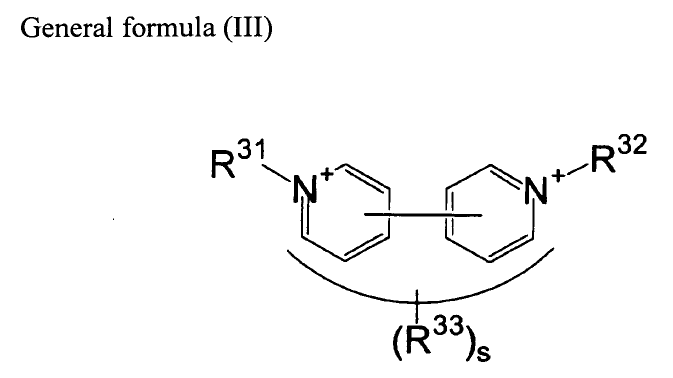

In the general formula (III), R³¹ and R³² each independently represent an alkyl group, an alkenyl group, an alkynyl group, an aryl group, or a heterocyclic ring, and R³³ represents a substituent. Further, s represents an integer of 0 to 8. When s is an integer of 2 or greater, plural R³³s are present, and the plural R³³s may be same as or different from each other, and may combine with each other to form a ring.

In the general formula (III), the alkyl group represented by R³¹ or R³² preferably has 1 to 18 carbon atoms, and more preferably has 1 to 8 carbon atoms. Further, the alkyl group represented by R³¹ or R³² may be linear, branched, or cyclic. Specific examples thereof include methyl, ethyl, n-propyl, isopropyl, n-butyl, isobutyl, s-butyl, isoamyl, n-hexyl, cyclohexyl, 2-ethylhexyl, and n-octyl.

In the general formula (III), the alkenyl group represented by R³¹ or R³² preferably has 2 to 18 carbon atoms, and more preferably has 2 to 8 carbon atoms. Specifically, the alkenyl group may be, for example, vinyl, 2-propyl, 2-methylpropenyl, or 1,3-butadienyl.

In the general formula (III), the alkynyl group represented by R³¹ or R³² preferably has 2 to 18 carbon atoms, and more preferably has 2 to 8 carbon atoms. Specifically, the alkynyl group may be, for example, ethynyl, propynyl, or 3,3-dimethylbutynyl.

In the general formula (III), the aryl group represented by R³¹ or R³² preferably has 6 to 18 carbon atoms, and more preferably has 6 to 10 carbon atoms. Specifically, the aryl group may be, for example, phenyl, 1-naphthyl, or 2-naphthyl.

In the general formula (III), the heterocyclic group represented by R³¹ or R³² is preferably a saturated or unsaturated heterocyclic group containing 4 to 7 carbon atoms. The hetero atom(s) contained in the heterocyclic group are preferably selected from a nitrogen atom, an oxygen atom, or a sulfur atom. Specific examples thereof include 4-pyridyl, 2-pyridyl, 2-pyrazyl, 2-pyrimidyl, 4-pyrimidyl, 2-imidazolyl, 2-furyl, 2-thiophenyl, 2-bezoxazolyl, or 2-benzothioxazolyl.

Each of R³¹ and R³² in the general formula (III) may further have a substituent, and the substituent may be selected from those shown above as examples of the substituent represented by R in the general formula (I).

The substituent represented by R³³ in the general formula (III) has the same definition as R in the general formula (II), and is preferably an alkyl group containing 1 to 18 carbon atoms, and more preferably a non-substituted alkyl group containing 1 to 8 carbon atoms.

In the general formula (III), s represents an integer of 0 to 8; s is preferably an integer of 0 to 4, more preferably an integer of 0 to 2, and particularly preferably 0. When s is an integer of 2 or greater, plural R³³s are present, and the plural R³³s may be same as or different from each other, and may combine with each other to form a ring.

Further, in the general formula (III), the two pyridine rings may be connected at any position. The two pyridine rings are preferably connected to each other at 2-position or 4-position of the pyridine rings, and particularly preferably connected to each other at the 4-position of each pyridine ring.

The molecules of the oxanol dye represented by the general formula (I) may combine with each other at any position to form an oligomer; in this case, each unit molecule may be the same or different.
Further, the oxanol dye represented by the general formula (I) may be bonded to the polymer chain of polystyrene, polymethacrylate, polyvinyl alcohol, cellulose, etc.

Specific examples of the oxanol dyes represented by the general formula (I) used in the invention include specific examples for oxanol dyes described in JP-A Nos. 63-209995, 10-297103, 11-78106, 11-348420, 2000-52658, and 2000-272241.
Some of such compounds are shown below as examples.

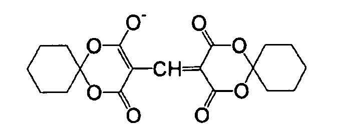

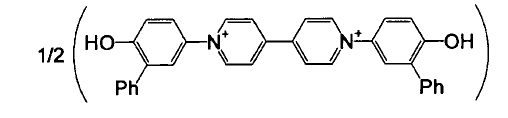

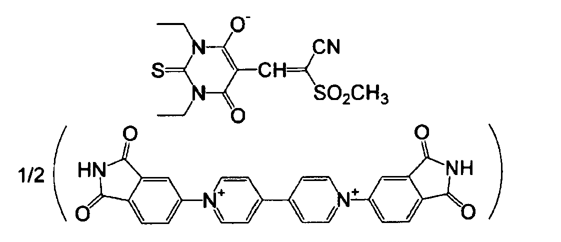

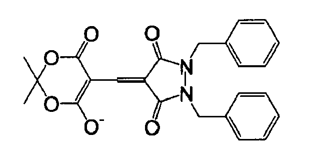

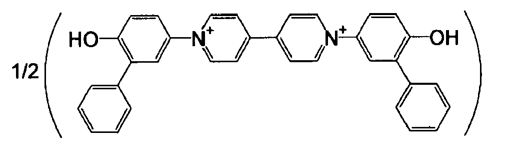

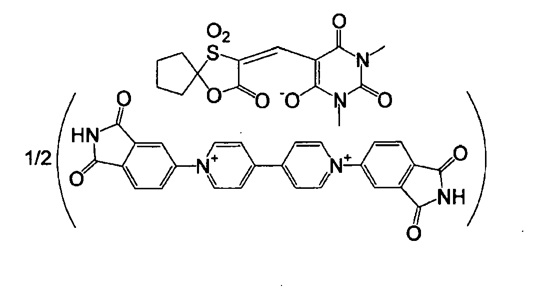

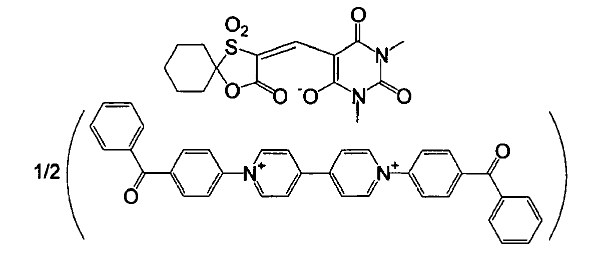

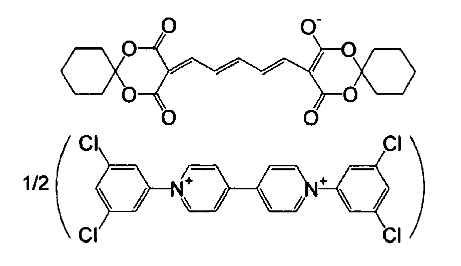

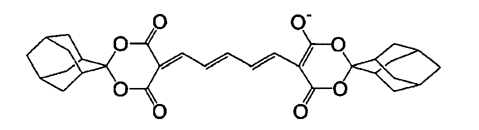

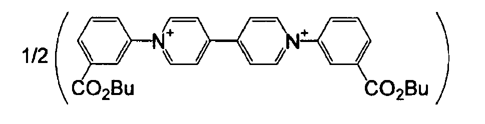

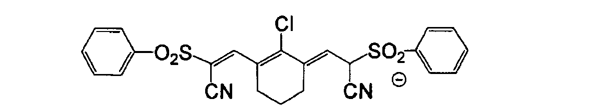

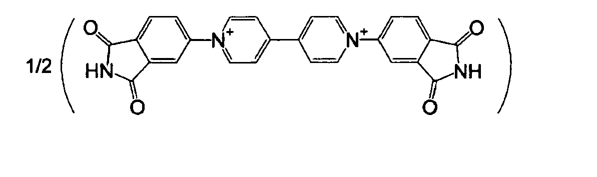

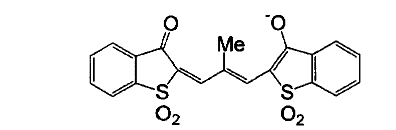

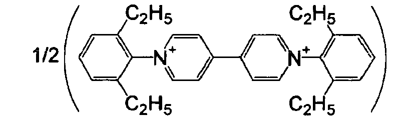

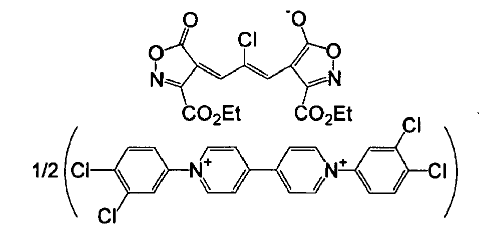

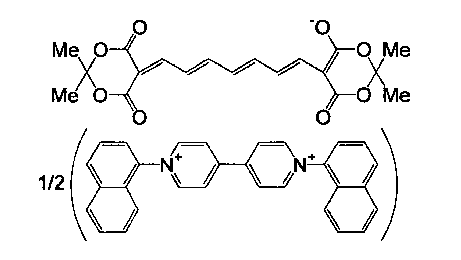

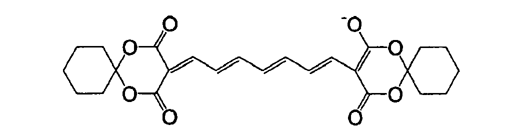

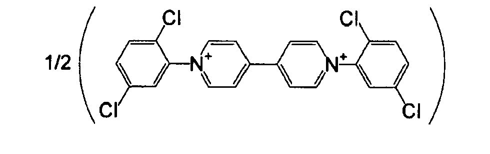

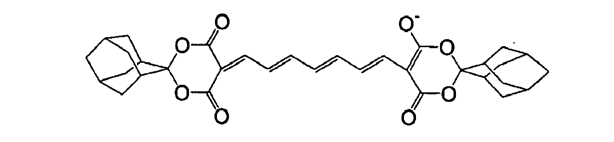

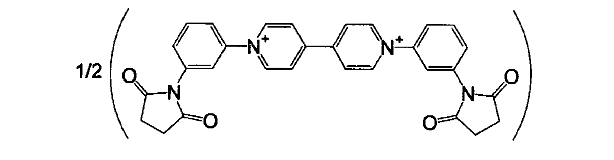

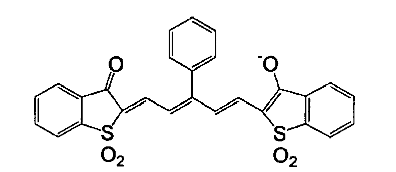

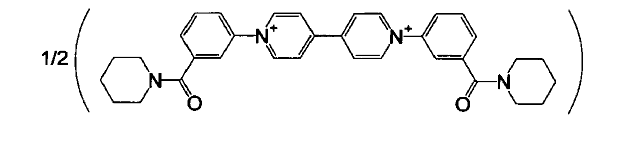

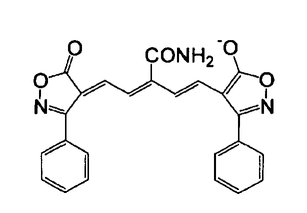

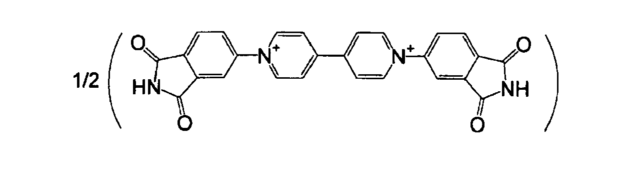

The dyes used for the dye recording layer in the invention have been described above. The dye used for the dye recording layer is particularly preferably a phthalocyanine dye from the viewpoint that the phthalocyanine dye can sufficiently reduce cross-talk when combined with the undercoating layer described above.

The content of the recording substance such as the dye is preferably within a range from 50 to 100 mass% in the dye recording layer in order to obtain sufficient recording characteristics, and the content is more preferably within a range from 55 to 100 mass%, and further preferably within a range from 60 to 100 mass%.

The dye recording layer preferably contains various anti-fading agents for improving the light fastness of the dye recording layer. The anti-fading agent may be, for example, an organic oxidizing agent or a singlet oxygen quencher. The organic oxidizing agent to be used as the anti-fading agent is preferably a compound described in JP-A No. 10-151861. As the singlet oxygen quencher, those described in known publications such as patent specifications can be utilized. Specific examples thereof include singlet oxygen quenchers described, for example, in JP-A Nos. 58-175693, 59-81194, 60-18387, 60-19586, 60-19587, 60-35054, 60-36190, 60-36191, 60-44554, 60-44555, 60-44389, 60-44390, 60-54892, 60-47069, 63-209995, 4-25492, JP-B Nos. 1-38680, and 6-26028, specification of German Patent No. 350399, and Journal of Japan Chemical Society, 1992, October, p. 1141.

Preferred examples of the singlet oxygen quencher are, for example, compounds represented by the following general formula (a).

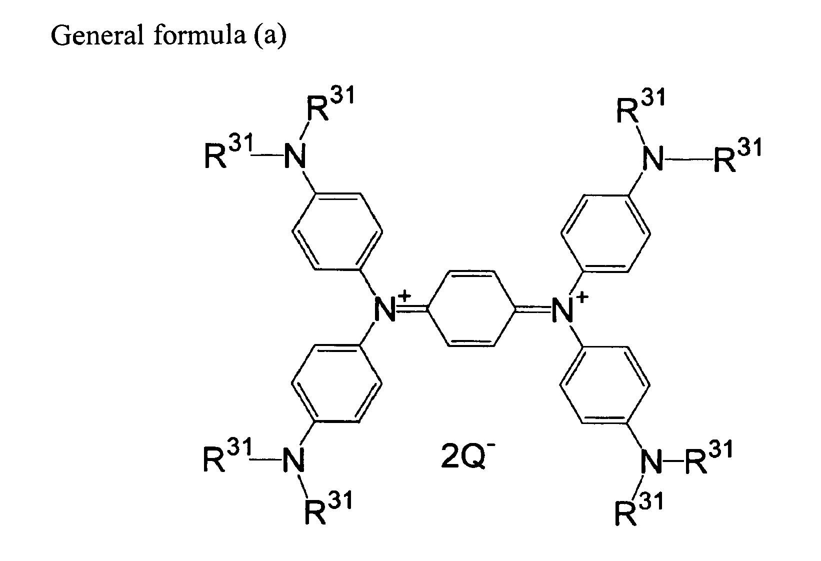

In the general formula (a), R³¹ represents an alkyl group which may have a substituent, and Q⁻ represents an anion.

In the general formula (a), R³¹ is generally an alkyl group containing 1 to 8 carbon atoms which may be substituted, and preferably a non-substituted alkyl group containing 1 to 6 carbon atoms. Examples of the substituent that can be introduced to the alkyl group include a halogen atom (for example, F, Cl), an alkoxy group (for example, methoxy and ethoxy), an alkylthio group (for example, methylthio and ethylthio), an acyl group (for example, acetyl, and propionyl), an acyloxy group (for example, acetoxy and propionyloxy), a hydroxyl group, an alkoxycarbonyl group (for example, methoxy carbonyl and ethoxy carbonyl), an alkenyl group (for example, vinyl), and an aryl group (for example, phenyl and naphthyl). Among them, a halogen atom, an alkoxy group, an alkylthio group, and an alkoxycarbonyl group are preferred. Preferred examples of the anion represented by Q⁻ include ClO⁴⁻, AsF⁶⁻, BF⁴⁻, and SbF⁶⁻.

The amount of the anti-fading agent such as the singlet oxygen quencher to be used is usually within a range from 0.1 to 50 mass%, preferably within a range from 0.5 to 45 mass%, further preferably within a range from 3 to 40 mass% and, particularly preferably within a range from 5 to 25 mass%, based on the mass of the dye.

Further, in the dye recording layer in the invention, a binder can be used in addition to the dye described above. Examples of the binder include natural organic polymeric materials such as gelatin, cellulose derivatives, dextran, rosin and rubber; as well as synthetic organic polymers, for example, hydrocarbon resins such as polyethylene, polypropylene, polystyrene, and polyisobutylene; vinylic resins such as polyvinyl chloride, polyvinylidene chloride, and polyvinyl chloride-polyvinyl acetate copolymer; acrylic resins such as methyl polyacrylate and methyl polymethacrylate; polyvinyl alcohols, chlorinated polyethylenes, epoxy resins, butyral resins, rubber derivatives, and initial condensates of thermosetting resins such as phenolformaldehyde resins.

When using the binder as the material for the dye recording layer, the amount of the binder to be used is generally within a range from 0.01 times to 50 times the mass of the dye, and preferably within a range from 0.1 times to 5 times the mass of the dye.

In the invention, the dye recording layer can be formed by a method such as vapor deposition, sputtering, CVD, or solvent coating. Solvent coating is preferred.
An example of the method of forming the dye recording layer by solvent coating is a method that includes dissolving a recording material such as a dye together with a binder or the like in an appropriate solvent to prepare a coating solution and then coating the coating solution on a substrate to form a coating film and drying the coating film.
The concentration of the recording material (dye or compound described above) in the coating solution is generally within a range from 0.01 to 15 mass%, preferably within a range from 0.1 to 10 mass%, more preferably within a range from 0.5 to 5 mass% and most preferably within a range from 0.5 to 3 mass%.

Examples of the solvent for the coating solution include esters such as butyl acetate, ethyl lactate, and cellosolve acetate, ketones such as methyl ethyl ketone, cyclohexanone, and methyl isobutyl ketone; chlorinated hydrocarbons such as dichloromethane, 1,2-dichloroethane, and chloroform; amides such as dimethyl formamide; hydrocarbons such as methylcyclohexane; ethers such as dibutyl ether, diethyl ether, tetrahydrofuran and dioxane; alcohols such as ethanol, n-propanol, isopropanol, n-butanol, and diacetone alcohol; fluoro solvents such as 2,2,3,3-tetrafluoro propanol; and glycol ethers such as ethylene glycol monomethyl ether, ethylene glycol monoethyl ether, and propylene glycol monomethyl ether.
In consideration of the solubility of the dye to be used, only a single solvent may be used, or two or more solvents may be used in combination. In the coating solution, various additives such as antioxidants, UV-absorbents, plasticizers, and lubricants may be further added in accordance with the purpose.

The coating method for the solvent coating may be, for example, a spraying method, a spin coating method, a dipping method, a roll coating method, a blade coating method, a doctor roll method, or a screen printing method.
The thickness of the dye recording layer is generally within a range from 10 to 500 nm, preferably within a range from 15 to 300 nm, and further preferably within a range from 20 to 150 nm.
The dye recording layer may be either a single layer or a stacked layers.

### [Reflective layer]

For the purpose of improving the reflectance upon information reproduction, a reflective layer is disposed adjacent with the dye recording layer. The light reflecting substance as the material for reflective layer is a substance having high reflectance to laser light, and examples thereof include metals and semi-metals such as Mg, Se, Y, Ti, Zr, Hf, V, Nb, Ta, Cr, Mo, W, Mn, Re, Fe, Co, Ni, Ru, Rh, Pd, Ir, Pt, Cu, Ag, Au, Zn, Cd, Al, Ga, In, Si, Ge, Te, Pb, Po, Sn, and Bi, as well as stainless steel. The light reflecting substance may be used alone or two or more light reflecting substances may be used in combination, or an alloy containing two or more light reflecting substances may be used. Among them, preferred are Cr, Ni, Pt, Cu, Ag, Au, Al, and stainless steel. Particularly preferred are Au metal, Ag metal, Al metal, or alloys thereof. Most preferred are Ag metal, Al metal or alloys thereof.
The reflective layer can be formed on a substrate or on a dye recording layer, for example, by vapor deposition, sputtering or ion plating of the light reflecting substance.
The thickness of the reflective layer is generally within a range from 10 to 300 nm, and preferably within a range from 50 to 200 nm.

### [Adhesive layer or sticky layer]

An adhesive layer or a sticky layer is formed for bonding the reflective layer and the second substrate.
The material for the adhesive layer is preferably a photocurable resin. In particular, those with low cure shrinkage are preferred for preventing the warp of the disc. Such photocurable resin may be, for example, a UV-curable resin (UV-curable adhesive) such as "SD-640" or "SD-347" manufactured by Dai-Nippon Ink and Chemicals Inc.

Preferably, the adhesive in a predetermined amount is coated by on the surface of the reflective layer to be bonded, a second substrate is placed thereon, and then the adhesive is spread by spin coating so as to be uniformly provided between the surface to be bonded and the second substrate, followed by curing.

Further, as the tackiness agents used for the sticky layer, acrylic, rubber or silicon type tackiness agents can be used, and acrylic tackiness agents are preferred from the viewpoint of transparency and durability. It is preferred to use an acrylic tackiness agent comprising 2-ethylhexyl acrylate, n-butyl acrylate, or the like as a main ingredient, and further comprising, for enhancing cohesion, a copolymer of a short-chained alkyl acrylate or methacrylate such as methyl acrylate, ethyl acrylate, or methyl methacrylate, with acrylic acid, methacrylic acid, an acrylamide derivative, maleic acid, hydroxylethyl acrylate or glycidyl acrylate each of which can provide a crosslinking point for a crosslinker. By adequately controlling the mixing ratio and the kind of the main ingredient, the short-chained ingredient and the ingredient for adding the crosslinking points, the glass transition temperature (Tg) or the crosslinking density can be changed.

The crosslinker used in combination with the tackiness agent may be, for example, an isocyanate crosslinker. Examples of usable isocyanate crosslinkers include isocyanates such as tolylene diisocyanate, 4,4'-diphenylmethane diisocyanate, hexamethylene diisocyanate, xylylene diisocyanate, naphthylene-1,5-diisocyanate, o-toluidine diisocyanate, isopholone diisocyanate, and triphenylmethane triisocyanate, products of such isocyanates and polyalcohols, and polyisocyanates produced by condensation of such isocyanates. Commercially available products of such isocyanates include CORONATE L, CORONATE HL, CORONATE 2030, CORONATE 2031, MILLIONATE MR, MILLIONATE HTL, manufactured by Nippon Polyurethane Co., Ltd.; TAKENATE D-102, TAKENATE D-110N, TAKENATE D-200, and TAKENATE D-202 manufactured by Takeda Pharmaceutical Co., Ltd.; and DESMODULE L, DESMODULE IL, DESMODULE N, DESMODULE HL manufactured by Sumitomo Bayer Co.

For example, the tackiness agent may be coated in a predetermined amount on the reflective layer uniformly, and a second substrate may be placed thereon, followed by curing; or the tackiness agent in a predetermined amount may previously be coated uniformly on one surface of a second substrate to form a tackiness agent coating film, and the coating film may be bonded to the reflective layer, followed by curing.

In the invention, the thickness of the adhesive layer or sticky layer is preferably within a range from 1 to 1000 µm, more preferably within a range from 5 to 500 µm and, particularly preferably within a range from 10 to 100 µm, for providing elasticity.

### [Second Substrate]

The second substrate may be of the same material and the same shape as the first substrate excepting that a pre-groove is not formed.
In a certain embodiment, a similar pre-groove to that of the first substrate is formed also on the second substrate, and a dye recording layer is formed on the surface to be bonded. Further, an undercoating layer may also be provided between the second substrate and the dye recording layer, and a reflective layer may be provided on the dye recording layer on the opposite side to the substrate. Further, the undercoating layer, the dye recording layer, and the reflective layer formed on the second substrate side are respectively similar to the undercoating layer, the dye recording layer, and the reflective layer formed on the first substrate side. As described above, an optical information recording medium whose both sides are capable of recording and reproducing information is obtained by bonding, with the adhesive layer, a laminate including the second substrate and the dye recording layer provided thereon to a laminate described above including the first substrate and the undercoating layer, the dye recording layer and the reflective layer provided in this order on the first substrate such that the both substrates are located outside.

### [Protective layer]

In the optical information recording medium of the invention, a protective layer may also be disposed adjacent to the dye recording layer for the purpose of protecting the dye recording layer physically and chemically. When a dye recording layer is provided also on the second substrate side, a protective layer may be provided adjacent to the dye recording layer on the second substrate side.

Examples of the material used for the protective layer include inorganic materials such as ZnS, ZnS-SiO₂, SiO, SiO₂, MgF₂, SnO₂, and Si₃N₄, and organic materials such as thermoplastic resins, thermosetting resins and, UV-curable resins. The protective layer can be formed, for example, by laminating a film obtained by extrusion of a plastic material on the reflective layer using an adhesive. The protective layer may be provided also by a method such as vacuum vapor deposition, sputtering, or coating.

Further, in the case of a thermoplastic resin or a thermosetting resin, the protective layer may be formed also by dissolving the thermoplastic resin or the thermosetting resin in an appropriate solution to prepare a coating solution and then coating and drying the coating solution. In the case of a UV-curable resin, the protective layer can also be formed by dissolving the UV-curable resin in an appropriate solvent to prepare a coating solution, then coating the coating solution and irradiating UV-light to conduct curing. To the coating solution, various additives such as antistatic agents, antioxidants, and UV-absorbents may be added in accordance with the purpose. The thickness of the protective layer is generally within a range from 0.1 µm to 1 mm.

### [Recording Method]

A method of recording information (digital information) on the optical information recording medium of the invention will be described.
Recording of information on the optical information recording medium of the invention is conducted by using a recording apparatus including, at least, a laser pick-up that emits laser light, and a rotation mechanism that rotates the optical information recording medium. First, laser light is irradiated from the laser pick-up while rotating an unrecorded optical information recording medium at a predetermined linear recording speed by using the rotation mechanism. By the irradiation light, the dye in the dye recording layer absorbs the light to increase the temperature locally, so that pits, for example, are formed to change the optical characteristic of the portion, whereby information is recorded.
The recorded information is reproduced by irradiating laser light from the laser pick-up onto the dye recording layer of the optical information recording medium under rotation.

The recording waveform of the laser light upon formation of one pit may be a pulse train or single pulse. The ratio of the pulse width relative to the length to be actually recorded (pit length) is important.
The pulse width of the laser light relative to the length to be actually recorded is preferably within a range from 20 to 95%, more preferably within a range from 30 to 90%, and further preferably within a range from 35 to 85%. When the recording waveform is a pulse train, the above recitation means that the sum of the pulse widths is within the range described above.

The power of the laser light can be changed depending on the linear recording speed. When the linear recording speed is 6.61 m/s, the power of the laser light is preferably within a range from 1 to 100 mW, more preferably within a range from 3 to 50 mW, and further preferably within a range from 5 to 20 mW. Further, when the linear recording speed is doubled, the upper limit and lower limit of the preferred range of the power of the laser light are each increased 2^{1/2} times.

Further, for increasing the recording density, NA of an objective lens used for the pick-up is preferably 0.55 or more, and more preferably 0.60 or more.
Further, as the light source for recording and reproduction, a semiconductor laser is used preferably. The wavelength of the semiconductor laser is desirably in the vicinity of the wavelength at the foot on the longer wave side of the local maximum absorption wavelength or the maximum absorption wavelength of the recording substance (dye) in the dye recording layer. Using such a wavelength, the difference in the refractive index of the dye recording layer between before and after recording can be utilized more effectively.
In the invention, it is suitable to use a semiconductor laser having a center oscillation wavelength within a range from 350 to 450 nm.

### EXAMPLES

In the following, the present invention will be described in more detail by reference to examples, but the invention is not restricted to the following examples.

### [Example 1]

A substrate of a polycarbonate resin (manufactured by Teijin Chemicals Ltd., trade name: PANLITE AD5503) with a thickness of 0.6 mm, a diameter of 120 mm, and an inner diameter (center hole diameter) of 15 mm having a spiral pre-groove (track pitch:0.4 µm, groove depth; 90 nm, groove width (half-value width): 30 nm) was prepared by injection molding.
An undercoating layer with a thickness of 20 nm was formed on the pre-groove of the obtained substrate by using a target consisting of ZnO-Ga₂O₃ (ZnO: 3 mass parts, Ga₂O₃: 7 mass parts) by RF sputtering.

Then, 2.0 g of a phthalocyanine dye A shown below was dissolved in 100 ml of 2,2,3,3-tetrafluoro-1-propanol to prepare a coating solution and the coating solution was coated on the undercoating layer by a spin coating method to form a dye recording layer.
Then, a reflective layer having a thickness of 100 nm (Ag: 98.4 mass parts, Pd: 0.7 mass parts, Cu: 0.9 mass parts) was formed on the dye recording layer by DC sputtering.

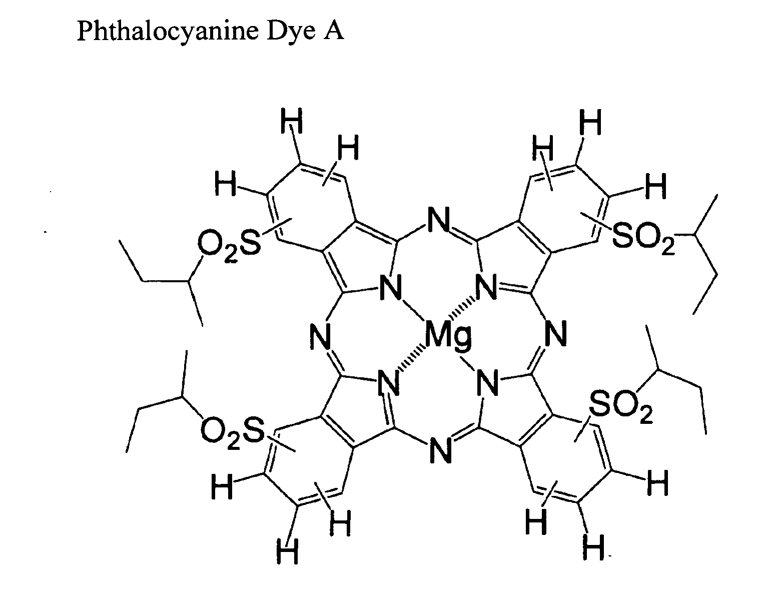

Then, a UV-ray curable resin (SD 640 manufactured by Dainippon Ink and Chemicals Inc.) was dropped and coated on the reflective layer. After placing a second substrate thereon, the UV-ray curable resin was spread by rotation at 3600 r.p.m, and then UV-light was irradiated to cure the UV-ray curable resin, whereby the two substrates were bonded to each other.
In this way, an optical information recording medium according to Example 1 was obtained.
The second substrate is of the same material and same shape as the first substrate except that the second substrate does not have a pre-groove.

### [Example 2]

An optical information recording medium according to Example 2 was obtained in the same manner as in Example 1 except that the phthalocyanine dye A was replaced with a phthalocyanine dye B shown below and that the undercoating layer had a thickness of 27 nm and was formed by using a target consisting of SiO₂.

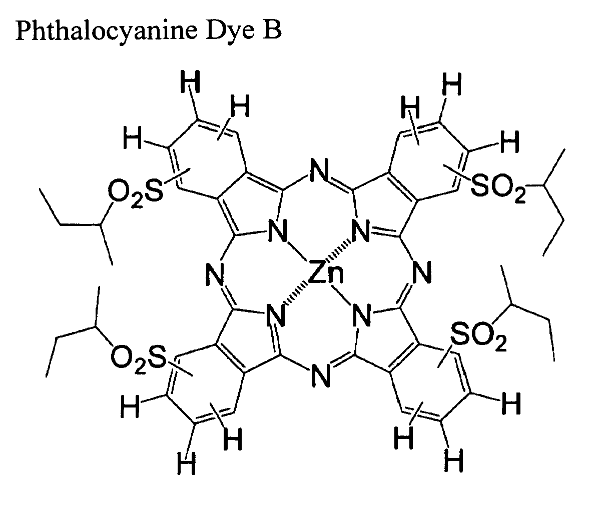

### [Example 3]

An optical information recording medium according to Example 3 was obtained in the same manner as in Example 2 except that the undercoating layer had a thickness of 22 nm and was formed by using a target consisting of Nb₂O₅.

### [Example 4]

An optical information recording medium according to Example 4 was obtained in the same manner as in Example 2 except that the undercoating layer had a thickness of 21 nm and was formed by using a target consisting of Nb₂O₅-SiO₂ (Nb₂O₅: 7 mass parts, SiO₂: 3 mass parts).

### [Example 5]

An optical information recording medium according to Example 5 was obtained in the same manner as in Example 2 except that the undercoating layer had a thickness of 22 nm and was formed by using a target consisting of Nb₂O₅-Al₂O₃ (Nb₂O₅: 7 mass parts, Al₂O₃: 3 mass parts).

### [Example 6]

An optical information recording medium according to Example 6 was obtained in the same manner as in Example 2 except that the undercoating layer had a thickness of 20 nm and was formed by using a target consisting of Ta₂O₅-Nb₂O₅ (Ta₂O₅: 5 mass parts, Nb₂O₅: 5 mass parts).

### [Example 7]

An optical information recording medium according to Example 7 was obtained in the same manner as in Example 2 except that the undercoating layer had a thickness of 20nm and was formed by using a target consisting of Ta₂O₅-SiO₂ (Ta₂O₅: 7 mass parts, SiO₂: 3 mass parts).

### [Comparative Example 1]

An optical information recording medium according to Comparative Example 1 was obtained in the same manner as in Example 1 except that the undercoating layer was not provided.

### <Evaluation>

Leakage of signals to adjacent tracks (cross-talk) was evaluated for the thus obtained optical information recording media of Examples 1 to 7 and Comparative Example 1 as described below.

### [Measurement for PRSNR (Partial Response Signal to Noise Ratio) value]

The obtained optical information recording media were set in a measuring apparatus equipped with a LD/PUH (wavelength = 405 nm, NA = 0.65 (ODU-1000, manufactured by Pulstec Industrial Co.)), random signals which had been subjected to ETM, RL (1,10) modulation were recorded to measure PRSNR. In the measurement, a value recorded and reproduced only for 1 track (PRSNR(S)) and a value recorded for three tracks and reproduced at the central track (PRSNR(M)) were measured. Recording was conducted at linear speed = 6.61 m/s, and at 9 mW (1 track recording)/8.7 mW (3 track recording) for Example 1 and Comparative Example 1 and at 10 mW (1 track recording)/9.6 mW (three track recording) for other Examples 2 to 7. Reproduction was conducted at 0.5 mW with an optimized recording emission pattern.
The results are shown in Table 5.

**Table 5**

| | Example 1 | Example 2 | Example 3 | Example 4 | Example 5 | Example 6 | Example 7 | Example 7 | Comp. Example 1 |
|---|---|---|---|---|---|---|---|---|---|
| Undercoating layer material | ZnO-Ge₂O₃ | SiO₂ | Nb₂O₅ | Nb₂O₅-SiO₂ | Nb₂O₅- Al₂O₃ | Ta₂O₅-Nb₂O₅ | Ta₂O₅-SiO₂ | Ta₂O₅- Al₂O₃ | not provided |
| Undercoating layer thickness | 20 nm | 27 nm | 22 nm | 21 nm | 22 nm | 20 nm | 20 nm | 20nm | - |
| PRSNR(S) | 24 | 23 | 23 | 21 | 20 | 20 | 21 | 21 | 10 |
| PRSNR(M) | 20 | 19 | 18 | 18 | 18 | 19 | 18 | 18 | - |

As is apparent from Table 5, it can be seen that favorable recording characteristics could not be obtained (for example, PRSNR(M) value was not obtained) in the case of the optical information recording medium of Comparative Example 1, whereas both PRSNR(S) value and PRSNR(M) values were excellent in the case of the optical information recording media of Examples 1 to 7 and the optical information recording media of Examples 1 to 7 were excellent in the recording characteristics.
It is considered that excess heat upon formation of pits is diffused to the undercoating layer owing to the presence of the undercoating layer, so that pits are not formed into an unnecessarily large size.

## Claims

1. An optical information recording medium comprising a first substrate, an undercoating layer, a dye recording layer, and a reflective layer provided in this order on the first substrate, and a second substrate bonded to the reflective layer via an adhesive layer or a sticky layer, wherein the first substrate has a pre-groove having a track pitch of 0.1 to 0.6 µm and a groove depth of 20 to 200 nm.

2. The optical information recording medium according to claim 1, wherein the undercoating layer contains a compound selected from the group consisting of a Nb oxide, a Nb nitride, a Ta oxide, and a Ta nitride.

3. The optical information recording medium according to claim 1 or 2,
wherein the undercoating layer contains a composite oxide containing a Nb oxide and/or a Ta oxide.

4. The optical information recording medium according to any one of claims 1 to 3, wherein the undercoating layer contains Nb₂O₅-SiO₂, Nb₂O₅-Al₂O₃, Nb₂O₅-Ta₂O₅, Ta₂O₅-SiO₂, or Ta₂O₅-Al₂O₃.

5. The optical information recording medium according to any one of claims 1 to 4, further comprising an additional dye recording layer disposed between the second substrate and the adhesive layer.

6. The optical information recording medium according to any one of claims 1 to 5, wherein a thickness of the undercoating layer is from 1 to 200 nm.

7. The optical information recording medium according to any one of claims 1 to 5, wherein the thickness of the undercoating layer is from 10 to 40 nm.

8. A method of manufacturing an optical information recording medium comprising:
forming an undercoating layer, a dye recording layer, and a reflective layer in this order on a first substrate and
bonding a second substrate to the reflective layer via an adhesive layer,
wherein the first substrate has a pre-groove, a track pitch of the pre-groove is from 0.1 to 0.6 µm, and a groove depth of the pre-groove is from 20 to 200 nm.

9. The method of manufacturing an optical information recording medium according to claim 8, wherein the undercoating layer contains a compound selected from the group consisting of a Nb oxide, a Nb nitride, a Ta oxide, and a Ta nitride.

10. The method of manufacturing an optical information recording medium according to claim 8, wherein the undercoating layer contains Nb₂O₅-SiO₂, Nb₂O₅-Al₂O₃, Nb₂O₅-Ta₂O₅, Ta₂O₅-SiO₂, or Ta₂O₅-Al₂O₃.

## Amended claims

### Amended claims under Art. 19.1 PCT

**1.** amended) An optical information recording medium comprising a first substrate having a pre-groove with a track pitch of 0.1 to 0.6 µm and a groove depth of 20 to 200 nm, an undercoating layer, a dye recording layer formed by coating a dye-containing solution, and a reflective layer provided in this order on the first substrate, and a second substrate bonded to the reflective layer via an adhesive layer or a sticky layer.

**2.** The optical information recording medium according to claim 1, wherein the undercoating layer contains a compound selected from the group consisting of a Nb oxide, a Nb nitride, a Ta oxide, and a Ta nitride.

**3.** The optical information recording medium according to claim 1 or 2, wherein the undercoating layer contains a composite oxide containing a Nb oxide and/or a Ta oxide.

**4.** The optical information recording medium according to any one of claims 1 to 3, wherein the undercoating layer contains Nb₂O₅-SiO₂, Nb₂O₅-Al₂O₃, Nb₂O₅-Ta₂O₅, Ta₂O₅-SiO₂, or Ta₂O₅-Al₂O₃.

**5.** The optical information recording medium according to any one of claims 1 to 4, further comprising an additional dye recording layer disposed between the second substrate and the adhesive layer.

**6.** The optical information recording medium according to any one of claims 1 to 5, wherein a thickness of the undercoating layer is from 1 to 200 nm.

**7.** The optical information recording medium according to any one of claims 1 to 5, wherein a thickness of the undercoating layer is from 10 to 40 nm.

**8.** amended) The optical information recording medium according to claim 1, wherein the dye is selected from a cyanine dye, an oxonol dye, a metal complex dye, an azo dye, or a phthalocyanine dye.

**9.** amended) A method of manufacturing an optical information recording medium comprising:
forming an undercoating layer, a dye recording layer, and a reflective layer in this order on a first substrate having a pre-groove with a track pitch of 0.1 to 0.6 µm and a groove depth of 20 to 200 nm; and
bonding a second substrate to the reflective layer via an adhesive layer.

**10.** canceled)
